# EUROPÄISCHE PATENTSCHRIFT

(11) **EP 2 198 999 B1**
(45) Veröffentlichungstag und Bekanntmachung des Hinweises auf die Patenterteilung: **03.04.2013**
(21) Anmeldenummer: 09015116.8
(22) Anmeldetag: 07.12.2009
(51) Int. Cl.: B23D 47/02, B27B 27/10

(54) **Werkzeugmaschine, insbesondere Kapp- und Gehrungssäge**
Tool machine, in particular mitre saw and mitre box saw
Machine-outil, notamment scie circulaire et à onglet

(30) Priorität: 18.12.2008 DE 202008016713 U
(43) Veröffentlichungstag der Anmeldung: 23.06.2010
(73) Patentinhaber: Metabowerke GmbH, 72622 Nürtingen (DE)
(72) Erfinder: Meelker, Thomas, 49767 Twist (DE)
(74) Vertreter: Lorenz, Markus

(56) Entgegenhaltungen:
- EP-A1- 1 604 764
- DE-U1- 29 807 546
- DE-U1-202004 009 166
- US-A- 4 452 117

## Beschreibung

Die Erfindung betrifft eine Werkzeugmaschine zur Bearbeitung von Holz, Kunststoff oder Metall, insbesondere ausgeführt als Kapp- und Gehrungssäge insbesondere für die Holzbearbeitung. Konkreter Gegenstand ist eine Werkzeugmaschine mit den Merkmalen des Oberbegriffs von Anspruch 1.

Eine derartige Maschine wird von DE 20 2004 009 166 U1 offenbart.

Nachfolgend wird als ein besonders bevorzugtes Beispiel einer Werkzeugmaschine der in Rede stehenden Art insbesondere eine Klapp- und Gehrungssäge für die Holzbearbeitung beschrieben. Das dient der einfachen Erläuterung, hat jedoch keine Beschränkung zum Ziel. Die Lehre der Erfindung ist auf das Zusammenwirken eines Trägers, der eine Werkstückauflagefläche bildet, mit einem Zusatzträger, der eine Zusatzfläche für die Werkstückauflage bildet, gerichtet. Diese Problemstellung findet sich bei Werkzeugmaschinen unterschiedlicher Art, wenn auch ganz besonders häufig bei Kapp- und Gehrungssägen als Maschinen für die Holz-, Kunststoff- und Metallbearbeitung (EP-A-1 902 802).

Die bekannte Werkzeugmaschine, von der die Erfindung ausgeht ( DE 20 2004 009 166 U1), ist eine Präzisions-Tischkreissäge. Bei dieser Tischkreissäge, wie bei allen Werkzeugmaschinen der in Rede stehenden Art, weist die Werkstückauflagefläche in Sägeschnittrichtung eine bestimmte Tiefe und quer zur Sägeschnittrichtung eine bestimmte Breite auf. Das Werkstück kann aber in seinen Abmessungen durchaus wesentlich größer sein als die zur Verfügung stehende Werkstückauflagefläche, insbesondere wesentlich breiter oder wesentlich tiefer als diese sein. Der Sägeschnitt in einem solch großen Werkstück kann nicht so präzise ausgeführt werden wie man sich das eigentlich wünscht.

In Erkennung des zuvor erläuterten Problems ist bei der bekannten Werkzeugmaschine, die zuvor genannt worden ist, am Träger zumindest an einer Seite ein Zusatzträger angebracht, der eine Zusatzfläche zur Werkstückunterstfttzung bildet. Hier ist vorgesehen, daß die Zusatzfläche des am Träger angebrachten Zusatzträgers gegenüber dem Träger zwischen einer dem Träger nahen Grundposition und einer vom Träger weitestmöglich entfernten Distanzposition verstellbar, nämlich mittels einer Stangen-Verschiebeführung verschiebbar ist, Die Stangen-Verschiebeführung weist am Zusatzträger mindestens eine Tragstange und am Träger eine die Tragstange verschiebbar aufnehmende Stangenführung auf. An der Stangenführung sitzt eine Stangenarretierung meist in Form einer Klemmschraube, die in eine Crerwindefassung im Träger eingeschraubt ist. Wird die Klemmschraube angezogen, so ist die Tragstange in der Stangenführung fixiert.

Mittels der Stangenarretiezung läßt sich die Zusatzfläche des Zusatzträgers in jeder beliebigen Auszugstellung blockieren, indem die Klemmschraube fest angezogen wird. Hier befindet sich am Zusatzträger ein Endanschlag für ein Werkstück, daher muß die Stangenarretierung sehr präzise sein, da sich ansonsten die mit dem Endanschlag eingestellte Schnittlänge am Werkstück verändert.

Bei der bekannten Werkzeugmaschine in Form einer Tischkreissäge ist der Zusatzträger durch einen lateralen Werkstückanschlag komplettiert worden. Dieser ist auf der Zusatzfläche angebracht und zwischen einer mit der Zusatzfläche bündigen oder darunter abgesenkten Passivstellung und einer oberhalb der Zusatzfläche befindlichen Aktivstellung (=Anschlagstellung) verstellbar. Der Werkstückanschlag ist in seiner Passivstellung in einer Aufnahme in der Zusatzfläche des Zusatzträgers versenkt.

Dadurch, daß der Werkstückanschlag versenkbar ist, stört er die Handhabung der Werkzeugmaschine beim Transport nicht. Man muß sich dabei vorstellen, daß insbesondere bei einer Kapp- und Gehrungssäge die Maschine insgesamt an den Zusatzträgers, die sich Grundposition befinden, getragen wird. Auch das Packmaß der Werkzeugmaschine bleibt unbeeinträchtigt und Beschädigungen der Werkstückanschläge werden vermieden.

Bei der bekannten Werkzeugmaschine ist der Werkstückanschlag am Zusatzträger mittels einer Parallelogramm-Kulissenführung beweglich gelagert. Durch einen manuellen Angriff am Werkstückanschlag kann dieser parallel nach oben angehoben oder nach unten in die Passivstellung abgesenkt werden.

Die Konstruktion mit einer Parallelogramm-Kulissenführung für den Werkstückanschlag ist etwas kompliziert. Der Lehre liegt daher das Problem zugrunde, die bekannte Werkzeugmaschine hinsichtlich der Betätigung des Werkstückanschlags eine Alternative bereit zu stellen.

Die zuvor aufgezeigte Problemstellung ist bei einer Werkzeugmaschine mit den Merkmalen des Oberbegriffs von Anspruch 1 durch die Merkmale des kennzeichnenden Teils von Anspruch 1 gelöst.

Erfindungsgemäß ist der Werkstückanschlag selbst am Zusatzträger mit einem Ende schwenkbar angelenkt. Am Werkstückanschlag befindet sich eine Betätigungshandhabe, die in Passivstellung des Werkstücksanschlags in einer Einfaßmulde in der Zusatzfläche versenkt liegt. Gleichwohl kann man diese Betätigungshandhabe in dieser Einfaßmulde in Passivstellung noch unterfassen und dadurch den Werkstückanschlag nach oben in seine Aktivstellung schwenken.

Bevorzugte Ausgestaltungen und Weiterbildungen der erfindungsgemäßen Werkzeugmaschine sind Gegenstand der weiteren Unteransprüche.

Besondere Bedeutung kommt der Kombination des erfingdungsgemäß im Zusatzträger versenkbaren Werkstückanschlags und einer präzisen, manuell betätigbaren Stangenarretierung zu, wie sie Gegenstand des Anspruchs 4 ist.

Hinsichtlich der Ausgestaltung der erfindungsgemäß realisierten Stangenarretierung ergeben sich weitere vorteilhafte Details auch aus der Beschreibung.

Im folgenden wird die Erfindung anhand einer lediglich ein Ausführungsbeispiel darstellenden Zeichnung näher erläutert. In der Zeichnung zeigt.
- Fig. 1: in perspektivischer Ansicht eine typische Kapp- und Gehrungssäge als Beispiel einer Werkzeugmaschine der in Rede stehenden Art,
- Fig. 2: in perspektivischer Ansicht einen Zusatzträger mit einem in der Zusatzfläche versenkten Werkstückanschlag in Passivstellung,
- Fig. 3: in perspektivischer Ansicht den Zusatzträger aus Fig. 2 mit dem Werkstückanschlag nun in Aktivstellung,
- Fig. 4: einen Teilschnitt durch einen Träger mit Zusatzträger einer Werkzeugmaschine gemäß Fig. 1,
- Fig. 5: in perspektivischer Ansicht die Stangenazrretierung der Stangen-Verschiebeführung aus Fig. 4.

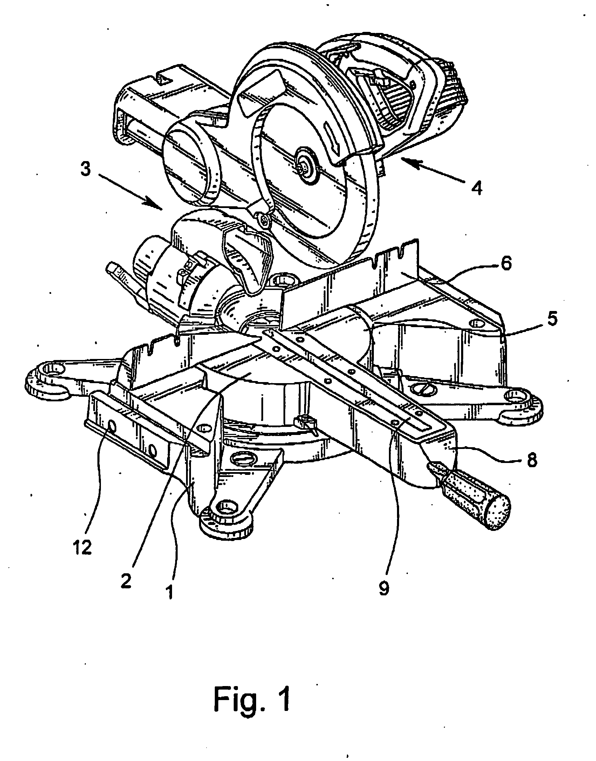

Fig. 1 zeigt den grundsätzlichen Aufbau einer erfindungsgemäßen Werkzeugmaschine, hier an dem bevorzugten Ausführungsbeispiel einer kombinierten Kapp-, Gehrungs- und Zugsäge. Generell gilt die Lehre der Erfindung jedoch für alle Arten von Werkzeugmaschinen mit einem Träger 1, der eine Werkzeugauflagefläche 2 bildet.

Die in Fig. 1 dargestellte Kapp- und Gehrungssäge zeigt einen Träger 1, der eine Werkstückauflagefläche 2 bildet. Am Träger 1 befindet sich eine Halterung 3 für ein oberhalb der Werkstückauflagefläche 2 angeordnetes, eine Sägeschnittrichtung definierendes Sägeaggregat 4.

In der dargestellten Konstruktion ist in den Träger 1 ein Drehtisch 5 eingesetzt, der im Träger 1 um eine Hochachse drehbar gelagert ist. Der Träger 1 zusammen mit dem Drehtisch 5 bildet gemeinsam die Werkstiickauflagcflächc 2.

Am Träger 1 angebracht ist ein Werkstückanschlag 6, an dem zum Ausführen eines Sägeschnittes ein Werkstück angelegt wird. Der Werkstückanschlag 6 verläuft quer zur Sägeschnittrichtung, wenn man diese bei in der mittigen Grundstellung befindlichem Sägeaggregat 4 (Fig. 1) definiert.

Geht man von dem in Grundstellung befindlichen Sägeaggregat 4 aus, so hat die Werkstückauflagefläche 2 in Sägeschnittrichtung eine bestimmte Tiefe und quer zur Sägeschnittrichtung eine bestimmte Breite.

Im hier dargestellten, besonderen Ausführungsbeispiel der Kapp- und Gehrungssäge mit dem eingelassenen Drehtisch 5 wird eine ausreichende Schnittlänge für das hier in Längsrichtung verschiebbare Sägeaggregat 4 durch den Auslegerarm 8 am Drehtisch 5 gewährleistet. Im Drehtisch 5 und Auslegerarm 8 befindet sich ein Eintauchschlitz 9 für den Zahnkranz des Sägeblattes des Sägeaggregats 4. Der Eintauchschlitz 9 definiert ebenfalls die Sägeschnittrichtung.

Die Unterstützung des Werkstückes 7 auf der Werksbickadagefläche 2 wird nach vorne hin zusätzlich durch den Auslegerarm 8 gewährleistet, aber eben nur in einem schmalen, mittigen Bereich.

Bereits in Fig. 1 kann man erkennen, daß am Träger 1 zumindest an einer Querseite, tatsächlich an beiden Querseiten, ein eine Zusatzfläche 10 bildender Zusatzträger 11 anbringbar ist, durch den die für die Unterstützung eines Werkstückes 7 wirksame Breite vergrößerbar ist. In Fig. 1 erkennt man das an den seitlich angedeuteten Steckfassungen 12, in die Tragstangen 13 eines Zusatzträgers 11 eingesteckt werden können.

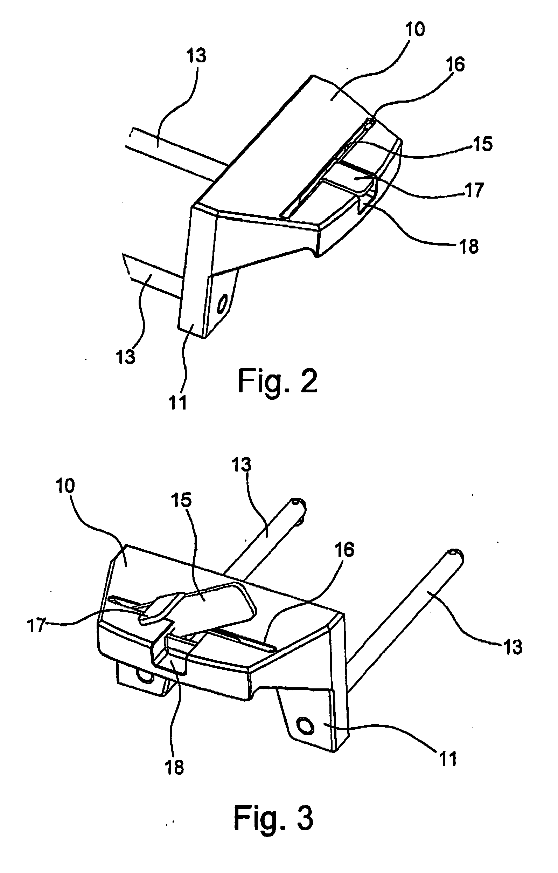

Fig. 1 hat die Position der Stangenführungen 12 an der Seite des Trägers 1 erkennen lassen. Fig. 2 und 3 zeigt nun einen Zusatzträger 11, der eine Zusatzfläche 10 zur Abstützung des Werkstücks bildet, mit zwei Tragstangen 13, die in die Stangenführungen 12 am Träger 1 eingeschoben werden, um den Zusatzträger 11 am Träger 1 der Werkzeugmaschine anzubringen.

Die Besonderheit bei dem in Fig. 2 und 3 dargestellten Ausfihrungsbeispiel besteht darin, daß am Zusatzträger 11 auf der Zusatzfläche 10 ein lateraler Werkstückanschlag 15 verstellbar angebracht ist. Das dargestellte und bevorzugte Ausführungsbeispiel zeichnet sich dabei ganz besonders dadurch aus, daß der Werkstückanschlag 15 zwischen einer mit der Zusatzfläche 10 bündigen oder darunter abgesenkten Passivstellung und einer oberhalb der Zusatzfläche 10 befindlichen Aktivstellung (=Anschlagstellung) verstellbar ist. Die Aktivstellung erkennt man in Fig. 3, die Passivstellung erkennt man in Fig. 2. Dabei erkennt man gut, daß der Werkstückanschlag 15 in der Passivstellung in einer Aufnahme 16 in der Zusatzfläche 10 des Zusatzträgers 11 versenkt ist.

Fig. 3 läßt erkennen, daß hier der Werkstückanschlag 15 am Zusatzträger 11, vorzugsweise mit einem Ende, schwenkbar angelenkt ist.

Der Werkstückanschlag 15 weist eine laschenartige Betätigungshandhabe 17 auf, Diese ist, wie man beim Vergleich von Fig. 2 und 3 erkennt, in Passivstellung des Werkstückausahlags 15 in einer Einfaßmulde 18 in der Zusatzfläche 10 versenkt. Man kann die Betätigungshandhabe 17 in dieser Einfaßmulde 18 aber auch noch unterfassen und dadurch den Werkstückanschlag 15 nach oben in die Aktivstellung von Fig. 3 schwenken.

Wesentlich ist insgesamt, daß der Werkstückanschlag 15 in Passivstellung über die Außenkontur des Zusatzträgers 11 nicht übersteht.

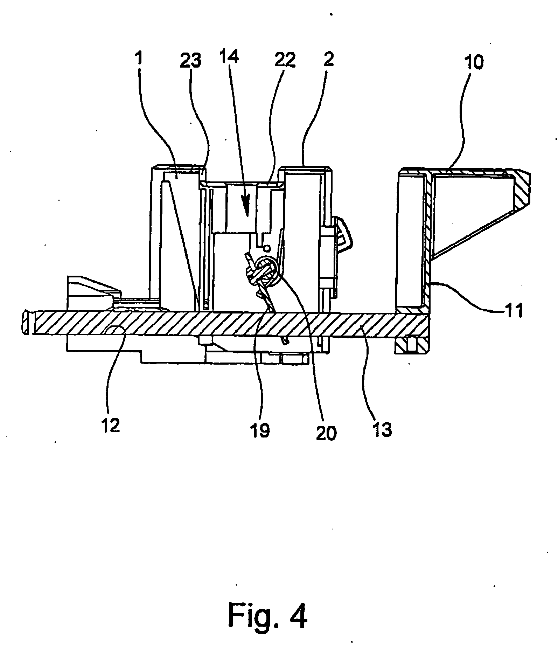

Fig. 3 in Verbindung mit Fig. 4 kann man im Zusammenhang entnehmen, daß nach bevorzugter Lehre dieser Erfindung hier vorgesehen ist, daß der Zusatzträger 11 am Träger 1 mit Hilfe einer Stangen-Verschiebeführung angebracht ist, die am Zusatzträger 11 die Tragstangen 13 und am Träger 1 die Tragstangen 13 verschiebbar aufnehmende Stangenführungen 12 aufweist.

Insbesondere empfiehlt sich, daß die Stangen-Verschiebeführung eine manuell betätigbare Stangenarretierung 14 aufweist. Eine präzise arbeitende Stangenarretierung 14 ist in Verbindung mit dem Werksmckanschlag 15 von besonderem Interesse. Der Werkstückanschlag 15 gibt die Position des Werkstücks auf der Werkstückauflagefläche 2 (und der Zusatzfläche 10) relativ zum Sägeaggregat 4 und der Sägeschnittebene vor. Eine präzise Position des Werkstückanschlags 15 ist für die präzise Einhaltung der vorgesehenen Maß des fertigen Werkstücks von entscheidender Bedeutung.

Hierbei ist nun nach bevorzugter Lehre der Erfindung vorgesehen, daß die Stangenarretierung 14 asymmetrisch arbeitend ausgebildet ist, nämlich durch eine Kraftbeaufschlagung des Zusatzträgers 11 in Richtung der Grundposition von selbst gelöst wird, hingegen bei einer Kraftbeaufschlagung des Zusatzträgers 11 in Richtung der Distanzposition selbsttätig blockiert und nur durch eine manuelle Betätigung lösbar ist.

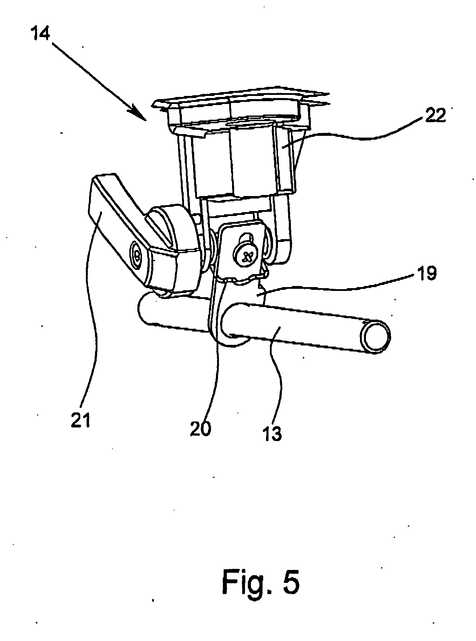

Fig. 4 und 5 zeigen im einzelnen eine bevorzugte konstruktive Lösung für die zuvor angesprochene Stangenarretierung 14.

Durch Kraftbeaufschlagung des Zusatzträgers 11 in Richtung der Grundposition, also in Fig. 4 nach links zum Träger 1 hin gerichtet wird die Stangenarretierung 14 selbsttätig gelöst, Bei einer entgegengesetzten Kraftbeaufschlagung hingegen, also in Richtung der Distanzposition, in Fig. 4 nach rechts, blockiert die Stangenarretierung 14 selbsttätig. Sie ist nur durch eine manuelle Betätigung lösbar.

In Fig. 4 und 5 erkennt man besonders gut, daß die Stangenarretierung 14 ein mit der Tragstange 13 zusammenwirkendes Blockierelement 19 und eine Vorspannfeder 20 aufweist, die das Blockierelement 19 an der Tragstange 13 in eine Blo kierstellung vorspannt. In Fig, 2 erkennt man die Vorspannfeder 20 als Schenkelfeder. In Fig. 5 erkennt man, daß die Vorspannfeder 20 als Doppel-Schenkelfeder mit einem Mittelbügel ausgeführt ist, der das Blockierelement 19 überfaßt.

Man kann in Fig. 2 und 5 gut nachvollziehen, daß die Konstruktion hier so getroffen ist, daß das Blockierelement 19 bei Kraftbeaufschlagung des Zusatzträgers 11 in Richtung der Grundposition entgegen der Federkraft der Vorspannfeder 20 aus der Blockierstellung auslenkbar ist, während das Blockierelement 19 bei einer Kraftbeaufschlagung des Zusatzträgers 11 in Richtung der Distanzposition in der Blockierstellung verharrt oder sich darin noch stärker verkeilt.

Die Konstruktion der Stangenarretierung 14 ist hier besonders einfach und zweckmäßig gewählt worden. Vorgesehen ist, daß das Blockierelement 19 als am Träger 1 schwenkbar gelagertes Klemmblech mit einem Langloch für die Tragstange 13 ausgeführt ist. Verändert sich die Lage des das Blockierelement 19 bildenden Klemmblechs so, daß es weniger schräg zur Tragstange 13 steht, so paßt die Tragstange 13 frei durch das Langloch. Sie kann ohne wesentlichen Widerstand verschoben werden. Das geschieht dann, wenn in Fig. 4 diese Verschiebebewegung nach links ausgeführt wird,

Will ein Benutzer jedoch den Zusatzträger 11 mit den Tragstangen 13 weiter in Richtung der Distanzposition, also aus dem Träger 1 herausziehen, so muß er den in Fig. 5 erkennbaren, außen am Träger 1 angebrachten Betätigungshebel 21 nach unten drücken. Entgegen der Federkraft der Vorspannfeder 20 wird dadurch das das Blockierelement 19 bildende Klemmblech senkrechter gestellt. Solange der Betätigungshebel 21 festgehalten wird kann der Zusatzträger 11 verschoben werden.

Wird der Betätigungshebel 21 losgelassen, so wird das Klemmblech durch die Vorspannfeder 20 in die in Fig. 4 dargestellte Stellung zurückgedrückt und blo kiert die Tragstange 13 wieder.

Fig. 4 und 5 zeigen im übrigen im Zusammenhang, daß die Stangenarretierung 14 insgesamt als eine in den Träger 1 einsetzbare Baugruppe mit einem Baugruppenträger 22 ausgeführt ist. Dabei läßt Fig. 4 gut erkennen, daß der Baugruppenträger 22 der Stangenarretierung 14 in eine passende Aufnahme 23 im Träger 1 einsetzbar, insbesondere von oben einsteckbar ist.

## Patentansprüche

1. Werkzeugmaschine, insbesondere ausgeführt als Kapp- und Gehrungssäge,
mit einem Träger (1), der eine Werkstückauflagefläche (2) bildet, und mindestens einem an einer Seite des Trägers (1) angebrachten, eine Zusatzfläche (10) bildenden Zusatzträger (11),
wobei die Zusatxfläche (10) des Zusatzträgers (11) gegenüber dem Träger (1) zwischen einer dem Träger (1) nahen Grundposition und einer vom Träger (1) weitestmöglich entfernten Distanzposition verstellbar ist, und
wobei am Zusatzträger (11) ein lateraler Werkstückanschlag (15) angebracht ist, wobei der Werkstückanschlag (15) auf der Zusatzfläche (10) angebracht und zwischen einer mit der Zusatzfläche (10) bündigen oder darunter abgesenkten Passivstellung und einer oberhalb der Zusatzfläche (10) befindlichen Aktivstellung (=Anschlagstellung) verstellbar ist,
wobei der Werkstückanschlag (15) in der Passivstellung in einer Aufnahme (16) in der Zusatzfläche (10) des Zusatzträgers (11) versenkt ist und über die Außenkontur des Zusatzträgers (11) nicht übersteht,
**dadurch gekennzeichnet,**
**daß** der Werkstückanschlag (15) am Zusatzträger (11) mit einem Ende schwenkbar angelenkt ist und
**daß** der Werkstückanschlag (15) eine laschenartige Betätigungshandhabe (17) aufweist, die in Passivstellung des Werkstückanschlags (15) in einer Einfaßmulde (18) in der Zusatzfläche (10) versenkt ist, jedoch in dieser Passivstellung in der Einfaßmulde (18) noch unterfaßbar ist, um dadurch den Werkstückanschlag (15) nach oben in die Aktivstellung schwenken zu können.

2. Werkzeugmaschine nach Anspruch 1, **dadurch gekennzeichnet,**
**daß** der Zusatzträger (11) am Träger (1) mit Hilfe einer Stangen-verschiebeführung angebracht ist, die am Zusatzträger (11) mindestens eine Tragstange (13) und am Träger (1) eine die Tragstange (13) verschiebbar aufnehmende Stangenführung (12) aufweist.

3. Werkzeugmaschine nach Anspruch 2, **dadurch gekennzeichnet,**
**daß** die Stangen-Verschiebeführung eine manuell betätigbare Stangenarretierung (14) aufweist.

4. Werkzeugmaschine nach Anspruch 3, **dadurch gekennzeichnet,**
**daß** die Stangenarretierung (14) asymmetrisch arbeitend ausgebildet ist, nämlich durch eine Kraftbeaufschlagung des Zusatzträgers (11) in Richtung der Grundposition von selbst gelöst wird, hingegen bei einer Kraftbeaufschlagung des Zusatzträgers (11) in Richtung der Distanzposition selbsttätig blockiert und nur durch eine manuelle Betätigung lösbar ist.

## Claims

1. Machine tool, particularly designed as a chop and mitre saw, with a support (1), which forms a workpiece-supporting surface (2), and at least one additional support (11) which is fitted to one side of the support (1) and forms an additional surface (10);
wherein the additional surface (10) of the additional support (11) can be adjusted, in relation to the support (1), between a basic position close to said support (1) and a distance position which is as remote as possible from said support (1); and
wherein a lateral workpiece stop (15) is fitted to the additional support (11);
wherein said workpiece stop (15) is fitted on the additional surface (10) and can be adjusted between a passive position, which is flush with the additional surface (10) or lowered beneath the latter, and an active position (= stop position) which is located above said additional surface (10);
wherein the workpiece stop (15) is lowered, when in the passive position, within a receptacle (16) in the additional surface (10) of the additional support (11) and does not project above the outer contour of said additional support (11);
**characterised in that**
the workpiece stop (15) is articulated in a pivotable manner on the additional support (11) by one end, and
that the workpiece stop (15) has a tongue-like actuating handle (17) which is lowered, when the workpiece stop (15) is in the passive position, within an enclosing trough (18) in the additional surface (10), but can still be grasped from underneath, when in the said passive position within the enclosing trough (18), in order to thereby be capable of pivoting the workpiece stop (15) upwards into the active position.

2. Machine tool according to claim 1, **characterised in that** the additional support (11) is fitted to the support (1) with the aid of a bar-type sliding guide which has, on the additional support (11), at least one supporting bar (13) and, on the support (1), a bar-type guide (12) which receives the supporting bar (13) in a displaceable manner.

3. Machine tool according to claim 2, **characterised in that** the bar-type sliding guide has a manually actuatable bar-arresting device (14).

4. Machine tool according to claim 3, **characterised in that** the bar-arresting device (14) is constructed so as to operate asymmetrically, i.e. is released spontaneously as a result of the application of force to the additional support (11) in the direction of the basic position, but jams automatically on the application of force to said additional support (11) in the direction of the distance position and can be released only by manual actuation.

## Revendications

1. Machine outil, notamment scie circulaire et scie à onglet, comportant un support (1) qui forme une surface (2) d'appui d'une pièce à travailler et au moins une surface supplémentaire (10) rapportée d'un coté du support (1) et constituant un support auxiliaire (11),
où la surface supplémentaire (10) du support auxiliaire (11) est mobile par rapport au support (1), entre une position de base proche du support (1) et une position distante, de préférence aussi éloignée que possible du support (1), et où une butée latérale (15) pour pièce à travailler est montée sur le support auxiliaire (11),
où la butée (15) pour pièce à travailler est montée sur la surface supplémentaire (10) et qui est déplaçable entre une position passive qui est à fleur avec la surface supplémentaire (10) ou décalée en-dessous et une position active (= position de butée) qui se trouve au-dessus de la surface supplémentaire (10),
où la butée latérale (15) pour pièce à travailler est noyée, dans la position passive, dans un dégagement (16) ménagé dans la surface supplémentaire (10) du support auxiliaire (11) et ne dépasse pas le contour extérieur du support auxiliaire (11),
**caractérisé en ce que**,
la butée latérale (15) pour pièce à travailler est montée sur le support auxiliaire (11) de façon pivotante à une de ses extrémités, et
**en ce que** la butée latérale (15) pour pièce à travailler comporte un élément de manutention sous forme de languette (17) qui se trouve encastrée, dans la position passive, dans la butée latérale (15) pour pièce à travailler, à l'intérieur d'un dégagement (18) ménagé dans la surface supplémentaire (10), tout en restant, dans cette position passive, accessible dans le dégagement (18), de sorte que la butée latérale (15) pour pièce à travailler puisse être basculée vers le haut vers la position active.

2. Machine outil selon la revendication 1, **caractérisée en ce que**
le support auxiliaire (11) est lié au support (1) au moyen d'un guidage coulissant à tringle, qui comprend au moins une tringle porteuse (13) fixée au support auxiliaire (11) et un dispositif (12) récepteur coulissant de la tringle porteuse (13), lié au support (1).

3. Machine outil selon la revendication 2, **caractérisée en ce que**,
le moyen de guidage coulissant à tringle comporte un dispositif d'arrêt de tringle (14).

4. Machine outil selon la revendication 3, **caractérisée en ce que**,
le dispositif d'arrêt de tringle (14) est réalisé de façon asymétrique, c'est-à-dire que, par application d'une force, le support auxiliaire (11) est libéré d'office vers la position de base, par contre que par l'application d'une force, le support auxiliaire est bloqué automatiquement vers la position distante et ne peut être libéré que suite à une intervention manuelle.
